# FASCICULE DE BREVET EUROPEEN

(11) **EP 1 021 284 B1**
(45) Date de publication et mention de la délivrance du brevet: **15.01.2003**
(21) Numéro de dépôt: 97910489.0
(22) Date de dépôt: 16.10.1997
(51) Int. Cl.: B27K 5/02

(54) **COMPOSITION DESTINEE A RESTITUER AUX SURFACES DE BOIS LEUR TEINTE ORIGINELLE**
ZUSAMMENSETZUNG ZUR WIEDERHERSTELLUNG DER URSPRÜNGLICHEN FARBTÖNUNG AUF HOLZOBERFLÄCHEN
COMPOSITION FOR RESTORING THE ORIGINAL TINT OF WOODEN SURFACES

(30) Priorité: 18.10.1996 FR 9613278
(43) Date de publication de la demande: 26.07.2000
(73) Titulaire: Moreau, Alain, 63000 Clermont-Ferrand (FR); Pilorget, Henri, 63460 Teilhede Combronde (FR); Ferrari, Jaques, 38200 Vienne (FR)
(72) Inventeur: MOREAU, Alain, F-63000 Clermont-Ferrand (FR); PILORGET, Henri, F-63460 Teilhede Combronde (FR); FERRARI, Jacques, F-38200 Vienne (FR)
(74) Mandataire: Chanet, Jacques
(86) Numéro de dépôt international: FR9701844
(87) Numéro de publication internationale: WO98017446

(56) Documents cités:
- EP-A- 0 369 711
- DE-C- 164 892
- US-A- 3 687 627
- DATABASE WPI Section Ch, Week 7746 Derwent Publications Ltd., London, GB; Class E17, AN 77-82164Y XP002050513 & JP 52 120 104 A (FUJI SANGYO CO LTD) , 8 octobre 1977
- CHEMICAL ABSTRACTS, vol. 108, no. 22, 30 mai 1988 Columbus, Ohio, US; abstract no. 188659, A.D.ALIKSEEV ET AL.: "degradation of cellulose under oxidising pulping conditions" XP002050512 & KHIM. DREV., no. 2, 1988, pages 40-43,

## Description

La présente invention a pour objet l'application d'une composition chimique destinée à traiter les surfaces de bois grisées, en vue de leur redonner leur teinte d'origine, ainsi qu'une composition pour une telle application.

On sait que les surfaces de bois exposées aux intempéries, telles que les bardages, les portes et huisseries extérieures, les clôtures, etc.., perdent, sous les effets conjugués du soleil, de l'air et de la pluie, leur teinte d'origine, souvent ambrée, jaune pâle, rose etc., pour virer vers une teinte franchement grise.

On a préconisé l'utilisation de l'eau oxygénée (solution de peroxyde d'hydrogène, H₂O₂), fortement concentrée (dite à 45 volumes), associée à un acide minéral, pour blanchir le bois, et notamment le bois vieilli; l'effet obtenu est effectivement celui du blanchiment : cet agent chimique blanchit le bois, c'est à dire confère à sa surface une teinte uniforme blanc-jaunâtre ou blanc-cassé qui est grosso modo indépendante de l'essence du bois traitée, mais en aucune manière, lorsqu'il s'agit de bois grisés par le temps, la teinte originelle du bois n'est restituée; on notera aussi que l'utilisation de l'eau oxygénée concentrée est assez dangereuse, particulièrement pour la peau et les yeux.

On connaît par ailleurs, notamment par les brevets français 2.321.302 (HENKEL), 2.521.991 (L'AIR LIQUIDE) des compositions microbicides ou désinfectantes destinées aux industries agro-alimentaire, compositions à bases d'eau oxygénée et/ou de peracides, ou de peroxydes organiques accompagnés d'agents stabilisants.

Ces compositions sont généralement livrées aux utilisateurs sous forme relativement concentrée, par exemple de 35 à 45% de peracide; les utilisateurs peuvent les diluer selon le type de désinfection qu'ils ont à mettre en oeuvre.

C'est en appliquant de telles compositions à des surfaces ligneuses grisées pour les assainir, c'est à dire les stériliser, en vue d'un traitement ultérieur de coloration, que les inventeurs ont constaté que ce résultat, dit primaire, assez prévisible, était bien atteint sans endommagement du bois, mais qu'en outre la coloration d'origine du bois réapparaissait, ce qui a constitué un résultat secondaire assez surprenant.

Bien que l'invention s'apparente à une invention de nouvelle application de produit connu, une démarche inventive plus systématique a conduit ultérieurement les inventeurs à sélectionner un type de composition, ainsi qu'un mode de mise en oeuvre, convenant particulièrement bien à l'obtention de ce résultat secondaire, initialement non recherché.

Selon la présente invention, il est fait application d'une composition comprenant une solution acqueuse de peroxyde d'hydrogène, d'au moins un peracide d'acide organique, d'au moins un agent stabilisant du peroxyde d'hydrogène, et d'au moins un acide minéral fort, au traitement des surfaces de bois grisées, pour leur redonner leur teinte originelle.

De préférence le peroxyde d'hydrogène est présent dans une proportion en poids comprise entre 2% et 40%.

De préférence, le dit peracide organique est l'un au moins des peracides du groupe comprenant l'acide peracétique, l'acide perpropionique, et il est présent dans une proportion en poids comprise entre 1,5% et 5%.

De préférence la composition de l'invention comporte en outre un acide minéral fort du groupe comprenant l'acide sulfurique, l'acide nitrique, l'acide phosphorique, dans une proportion de 0,1% à 1% (en poids), mais il s'agit de préférence d'acide nitrique. Cet acide minéral joue un rôle de catalyseur dans la formation et le maintien en équilibre des proportions du ou/des peracides.

De préférence encore ledit agent stabilisant est l'un des agents du groupe comprenant l'acide dipicolinique, le stannate de sodium, le salicylate de sodium, l'hydroxyquinone, le tertiobutyloxytoluène, un dérivé phosphonique (pour ce type de stabilisant on pourra se reporter à la première publication citée), dans une proportion en poids comprise entre 0,5% et 5%;

De préférence enfin la composition comprend un agent tensioactif, par exemple un alkylbenzènesulfonate de sodium, à raison de 0,1% à 1% en poids.

### Exemple d'une composition conforme à l'invention :

un solution aqueuse comprenant:
- du peroxyde d'hydrogène à raison de 16% (en poids),
- de l'acide peracétique à raison de 2,5% (en poids)
- de l'acide nitrique à raison de 0,1% (en poids)
- de l'acide dipicolinique à raison de 0,2% (en poids);

### Exemple de procédé de mise en oeuvre

L'invention propose aussi l'application d'une composition telle que sus décrite comprenant les étapes successives consistant à:
1°) appliquer la dite composition sur la surface ligneuse au moyen d'un pinceau ou par pulvérisation,
2°) laisser la solution agir sur la surface ligneuse pendant une durée de 3 à 5 minutes pour les bois résineux et de 5 à 10 minutes pour les bois "feuillus" et pour les bois exotiques,
3°) rincer la surface :
   soit à l'eau sous pression du réseau (environ 3 bar) en brossant,
   soit au jet "nettoyeur" à une pression comprise entre 30 et 50 bars.

Dans tous les cas il s'écoule du bois traité une solution sombre fortement chargée, tandis que la teinte originelle du bois est régénérée et que celui-ci se trouve débarrassé des moisissure en profondeur, des mousses, des champignons et d'une manière générale des parasites qui provoquent sa détérioration. Le bois ainsi traité non seulement a retrouvé sa teinte originelle, mais il est tout à fait apte à subir des traitements ultérieurs, enduction de lasure par exemple.

## Revendications

1. Application d'une composition comprenant une solution aqueuse acide de peroxyde d'hydrogène, d'au moins un peracide d'acide organique, d'au moins un agent stabilisant du peroxyde d'hydrogène, et d'au moins un acide minéral fort, au traitement des surfaces de bois grisés, pour leur redonner leur teinte originelle.

2. Application selon la revendication 1, **caractérisée :**
**en ce que** le dit acide minéral fort est l'acide nitrique, et en ce que le dit peracide est l'acide peracétique.

3. Composition pour une application conforme à la revendication 2, **caractérisée :**
**en ce qu'**elle est constituée par une solution aqueuse comprenant:
- du peroxyde d'hydrogène à raison de 16% (en poids),
- de l'acide peracétique à raison de 2,5% (en poids)
- de l'acide nitrique à raison de 0,1% (en poids)
- de l'acide dipicolinique à raison de 0,2% (en poids).

4. Application selon l'une quelconque des revendications 1 ou 2, **caractérisé :**
**en ce qu'**il comprend les étapes successives consistant à:
1) appliquer la dite composition sur la surface ligneuse au moyen d'un pinceau ou par pulvérisation,
2) laisser la solution agir sur la surface ligneuse pendant une durée de 3 à 5 minutes pour les bois résineux et de 5 à 10 minutes pour les bois "feuillus" et pour les bois exotiques,
3) rincer la surface:
soit à l'eau sous pression du réseau
(environ 3 bar) en brossant,
soit au jet "nettoyeur" à une pression comprise entre 30 et 50 bar.

5. Application selon la revendication 4 d'une composition selon la revendication 3.

## Claims

1. Application for a composition comprising an acidic aqueous solution of hydrogen peroxide, at least organic acid peracid, at least one agent for stabilizing hydrogen peroxide, and at least one strong inorganic acid for the treatment of wooden surfaces that have become grey, so as to restore their original colour.

2. Application according to claim 1, **characterized in that** the said strong inorganic acid is nitric acid and **in that** the said peracid is peracetic acid.

3. Composition for an application according to claim 2, **characterized in that** it consists of an aqueous solution comprising;
- hydrogen peroxide in an amount of 16 % (by weight),
- peracetic acid in an amount of 2.5 % (by weight),
- nitric acid in an amount of 0.1 % (by weight),
- dipicolinic acid in an amount of 0.2 % (by weight).

4. Application according to either of claims 1 or 2, **characterized in that** it comprises successive steps consisting of:
1) applying the said composition to the ligneous surface by means of a paint brush or by spraying,
2) allowing the solution to act on the ligneous surface for a period of 3 to 5 minutes for resinous woods and 5 to 10 minutes for "deciduous" woods and exotic woods,
3) rinsing the surface:
either with water under mains pressure (approximately 3 bar) while brushing,
or with a "cleaning" jet at a pressure of between 30 and 50 bar.

5. Application according to claim 4 of a composition according to claim 3.

## Patentansprüche

1. Auftragen eines Gemischs, welches eine wässerige saure Wasserstoffperoxidlösung, mindestens eine Persäure einer organischen Säure, mindestens einen Stabilisator des Wasserstoffperoxids und mindestens eine starke Mineralsäure enthält, bei der Behandlung von angegrauten Hölzern, um ihnen ihre ursprüngliche Farbe zurück zu geben.

2. Auftragen nach Anspruch 1, **dadurch gekennzeichnet:**
**dass** die besagte starke Mineralsäure Salpetersäure ist und
**dass** die besagte Persäure Peressigsäure ist.

3. Gemisch für Auftragen nach Anspruch 2, **dadurch gekennzeichnet:**
**dass** es aus einer wässerigen Lösung besteht, welche enthält:
- Wasserstoffperoxid zu einem Anteil von 16 % (Gew.-%),
- Peressigsäure zu einem Anteil von 2,5 % (Gew.-%),
- Salpetersäure zu einem Anteil von 0,1 % (Gew.-%),
- Dipikolinsäure zu einem Anteil von 0,2 % (Gew.-%).

4. Auftragen nach einem der Ansprüche 1 oder 2, **dadurch gekennzeichnet, dass** es die aufeinander folgenden Stufen umfasst, die in Folgendem bestehen:
1) Auftragen des besagten Gemisches auf die Holzoberfläche mittels eines Pinsels oder durch Sprühen;
2) Einwirkenlassen der Lösung auf die Holzoberfläche über eine Dauer von 3 bis 5 Minuten bei harzigen Hölzern und von 5 bis 10 Minuten bei "Laubhölzern" und bei exotischen Hölzern;
3) Abspülen der Oberfläche
entweder mit Wasser unter Leitungsdruck (etwa 3 bar) und Abbürsten oder mit "Strahlreinigung" unter einem Druck zwischen 30 und 50 bar.

5. Auftragen des Gemischs nach Anspruch 3 gemäß den Festlegungen des Anspruchs 4.
